# EUROPEAN PATENT SPECIFICATION

(11) **EP 2 139 259 B1**
(45) Date of publication and mention of the grant of the patent: **25.04.2012**
(21) Application number: 08738713.0
(22) Date of filing: 21.03.2008
(51) Int. Cl.: H04W 56/00

(54) **TRANSMISSION RESTART METHOD, MOBILE STATION, AND RADIO BASE STATION**
ÜBERTRAGUNGSNEUSTARTVERFAHREN, MOBILSTATION UND DRAHTLOSE BASISSTATION
PROCÉDÉ DE REDÉMARRAGE DE TRANSMISSION, STATION MOBILE, ET STATION DE BASE SANS FIL

(30) Priority: 23.03.2007 JP 2007077975
(43) Date of publication of application: 30.12.2009
(73) Proprietor: NTT DOCOMO, INC., Chiyoda-ku Tokyo 100-6150 (JP)
(72) Inventor: HARADA, Atsushi, Tokyo 100-6150 (JP); ISHII, Hiroyuki, Tokyo 100-6150 (JP); UMESH, Anil, Tokyo 100-6150 (JP); ISHII, Minami, Tokyo 100-6150 (JP)
(74) Representative: HOFFMANN EITLE
(86) International application number: PCT/JP2008/055320
(87) International publication number: WO 2008/123155

(56) References cited:
- US-A1- 2007 064 665
- NTT DOCOMO ET AL: "Uplink synchronization", 3GPP DRAFT; R2-070781, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070209, 9 February 2007 (2007-02-09), XP050133807, [retrieved on 2007-02-09]
- INTERDIGITAL COMMUNICATIONS CORPORATION: "Periodic Resource Assignment for Uplink Synchronization Transmission in LTE Active Mode", 3GPP DRAFT; R2-062803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Seoul, Korea; 20061005, 5 October 2006 (2006-10-05), XP050132330, [retrieved on 2006-10-05]
- NOKIA: "Uplink Synchronization", 3GPP TSG RAN WG2 AD-HOC ON LTE; R2-061849, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] vol. TSG-RAN WG2, no. Cannes, France, 27 June 2006 (2006-06-27), pages 1-3, XP008119282, Retrieved from the Internet: URL:http://www.3gpp.org/ftp/TSG_RAN/WG2_RL 2/TSGR2_AHs/2006_06_LTE/Docs/R2 061849.zip>
- "3rd Generation Partnership Project; Technical Specification Group Radio Access Network; Evolved Universal Terrestrial Radio Access (E-UTRA) Medium Access Control (MAC) protocol specification (Release 8)", INTERNET CITATION, 1 December 2007 (2007-12-01), pages 1-23, XP002522112, Retrieved from the Internet: URL:http://www.3gpp.org/ftp/Specs/archive/ 36_series/36.321/ [retrieved on 2009-03-31]
- NOKIA: 'Uplink Synchronization' 3GPP TSG RAN WG2 AD-HOC ON LTE vol. R2-061849, 27 June 2006, pages 1 - 3, XP008119282
- NTT DOCOMO, FUJITSU, NEC, PANASONIC, SHARP, TOSHIBA CORPORATION: 'Uplink Timing Control for E-UTRA' 3GPP TSG RAN WG1 MEETING #47BIS vol. R1-070106, 15 January 2007, pages 1 - 2, XP008119284
- NTT DOCOMO, INC.: 'Uplink synchronization' 3GPP 12 February 2007, pages 1 - 3, XP008135975

## Description

### Technical Field

The present invention relates to a transmission restarting method, a mobile station and a radio base station for restarting transmission of downlink user data to a mobile station in a discontinuous reception state.

### Background Art

In US 2007/0064665 A1, there is described a method and apparatus for accessing a contention-based uplink random access channel in a single carrier frequency division multiple access system. A wireless transmit/receive unit randomly selects an RACH sub-channel and a signature among a plurality of available sub-channels and signatures. The wireless transmit/receive unit transmits a preamble using the selected signature via the selected sub-channel at a predetermined or computed transmission power. A base station monitors the radio access channel to detect the preamble and sends an acquisition indicator to the wireless transmit/receive unit when a signature is detected on the radio access channel. When receiving a positive acknowledgement, the wireless transmit/receive unit sends a message part to the base station. If receiving a negative acknowledgement or no response, the wireless transmit/receive unit retransmits the preamble.
Further, in Interdigital Communications Corporation: "Periodic Resource Assignment for Uplink Synchronization Transmission in LTE Active Mode", 3GPP Draft, R2-062803, 3rd Generation Partnership Project (3GPP), Mobile Competence Centre, 650, Route des Lucioles, F-06921 Sophia-Antipolis Cedex, France, Vol. RAN WG2, No. Seoul, Korea, 20061005, 5 October 2006, XP050132330, there is discussed the periodic resource allocation scheme in an LTE_Active mode for maintenance of uplink timing synchronization and measurement reporting. It is proposed to schedule uplink dedicated resources in LTE_Active mode to maintain uplink timing synchronization and measurement reporting. The dedicated resources should be reserved by a base station based on the periodicity requirements.
Further, in NOKIA: "Uplink Synchronization", 3GPP TSG RAN WG2 Ad-hoc on LTE, R2-061849, 3rd Generation Partnership Project (3GPP), Mobile Competence Centre, 650, Route des Lucioles, F-06921 Sophia-Antipolis Cedex, France, [Online] Vol. TSG-RAN WG2, No. Cannes, France, 27 June 2006, there is discussed uplink synchronization. The starting point is that power saving options in LTE_ACTIVE and LTE_IDLE shall be similar and that mobile station power saving possibilities shall be taken into account through enabling the usage of a discontinuous reception state and a discontinuous reception state in LTE-ACTIVE. There is discussed the issue of uplink synchronization requirements together with mobile station power saving possibilities in the LTE_ACTIVE mode. In particular, a finding is that aligning the loss of uplink synchronization in LTE_ACTIVE state saves both the mobile station battery life and the cell resources at the cost of a possible increase in the time that it takes to resume uplink transmission once the timing advance has expired. Allowing the loss of uplink synchronization in LTE_ACTIVE state would be of benefit to burst services like WEB browsing, whereas for services with very tight delay requirements such as VoIP, uplink synchronization should be maintained. Thus, depending on the service, the radio access network should be allowed to decide if uplink synchronization should be maintained or not in the LTE_ACTIVE state.
Further, in "3rd Generation Partnership Project, Technical Specification Group Radio Access Network, Evolved Universal Terrestrial Radio Access (E-UTRA) Medium Access Control (MAC) Protocol Specification (Release 8)", Internet Citation, 1 December 2007, pages 1-23, XP002522112, there is described a medium access control protocol specification for 3GPP. In particular, the document specifies the E-UTRA MAC protocol generally referring to the MAC architecture and channel structure, further to MAC procedures, and still further to related protocol data units, formats, and parameters, respectively.
In recent years, there has been known a technique by which a mobile station UE performs "discontinuous reception" of downlink data in order to save its own battery, in a radio access scheme such as "LTE (long term evolution) ", the 3GPP standardization of which is underway.

In this radio access scheme, it is not always necessary to maintain uplink synchronization between the mobile station UE in a discontinuous reception state and a radio base station eNB.

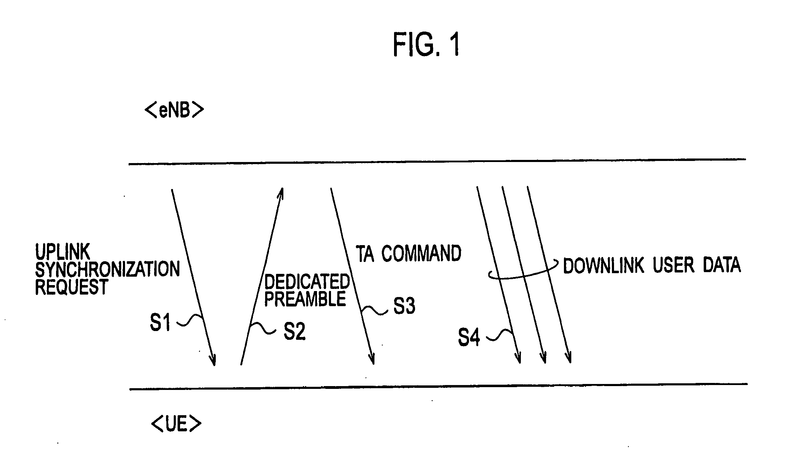

Accordingly, this radio access scheme is configured to establish uplink synchronization between the radio base station eNB and the mobile station UE, as shown in Fig. 1, when downlink user data for the mobile station UE in the discontinuous reception state occurs and when uplink synchronization is not maintained between the mobile station and the radio base station eNB.

To be more precise, as shown in Fig. 1, in Step S1, the radio base station eNB transmits "UL synch request (an uplink synchronization request)" to the mobile station UE, in order to establish uplink synchronization between the radio base station eNB and the mobile station UE.

In Step S2, using an asynchronous RACH (random access channel) , the mobile station UE transmits a dedicated preamble designated by the above-mentioned "UL synch request".

Here, the dedicated preamble means a data series which is individually allocated to each mobile station. Note that the "UL synch request" does not include the dedicated preamble itself but includes an identifier for identifying the dedicated preamble.

In Step S3, in response to the dedicated preamble transmitted from the mobile station UE, the radio base station eNB creates a TA (Timing Advance) command for adjusting uplink transmission timing for the mobile station UE, and transmits the TA command to the mobile station UE.

Thereafter, in Step S4, the radio base station eNB transmits the above-described downlink user data to the mobile station UE by using a DL-SCH (downlink shared data channel: Downlink-Shared Channel).
Non-patent Document 1: 3GPP TSG RAN WG2 #57, R2-070781

### Disclosure of the Invention

However, the conventional radio access scheme has a problem that, due to a limit of the number of dedicated preambles for the RACH, a dedicated preamble for the RACH cannot be allocated to a specific mobile station UE if these dedicated preambles remain unreleased.

Therefore, the present invention has been made in view of the foregoing problem. An object of the present invention is to provide a transmission restarting method, a mobile station and a radio base station which enable prevention of shortage of dedicated preambles allocatable to mobile stations by defining a method of releasing a dedicated preamble for a RACH in a procedure for restarting transmission of downlink user data to a mobile station in a discontinuous reception state.

A first aspect of the present invention is summarized as a transmission restarting method of restarting transmission of downlink user data to a mobile station in a discontinuous reception state according to claim 1, the method including the steps of: allocating, at a radio base station, a data series for identifying the mobile station, to the mobile station; transmitting, at the radio base station, an uplink synchronization request to the mobile station, the uplink synchronization request designating the allocated data series; notifying, at the mobile station, the radio base station of the data series designated by the uplink synchronization request, when successfully receiving the uplink synchronization request; creating, at the radio base station, a command for adjusting uplink transmission timing, and transmitting the command to the mobile station, when receiving the data series from the mobile station; restarting, at the radio base station, transmission of the downlink user data to the mobile station, when not receiving the data series from the mobile station until a predetermined period is passed after transmission of the command; creating, at the radio base station, the command, and transmitting the command to the mobile station, when receiving the data series from the mobile station before the predetermined period is passed after transmission of the command; releasing, at the mobile station and the radio base station, the data series, when a validity period of the data series is passed; and allocating, at the radio base station, a new data series to the mobile station, when the data series its released, wherein the mobile station and the radio base station can release the data series even before the validation period of the data series is passed, when transmission acknowledgment information in a HARQ process for the downlink user data is detected by the radio base station a predetermined number of times.

In the first aspect, the radio base station can notify, to the mobile station, the data series and the validity period of the data series, when transmitting the uplink synchronization request.

In the first aspect, the radio base station can notify, to the mobile station, the validity period of the data series, when the mobile station sets up an RRC connection.

In the first aspect, the radio base station can notify, to the mobile station, the validity period of the data series, when the mobile station executes a process for registration to a network.

In the first aspect, the validity period of the data series can be defined by a maximum number of times of retransmission of the data series when the command is not received.

In the first aspect, the new data series can be the same data series as the released data series.

In the first aspect, the data series can be a preamble for a random access channel; and the mobile station can notify, to the radio base station, the preamble designated by the uplink synchronization request by using the random access channel, when successfully receiving the uplink synchronization request.

A second aspect of the present invention is summarized as a mobile station configured to restart continuous reception of downlink user data in a discontinuous reception state according to claim 8, wherein the mobile station is configured to: notify, to a radio base station, a data series designated by an uplink synchronization request transmitted by the radio base station, when successfully receiving the uplink synchronization request; notify, to the radio base station, the data series, when failing to receive a command for adjusting uplink transmission timing, the command transmitted by the radio base station; and release the data series, when a validity period of the data series is passed, wherein the mobile station can be configured to release the data series even before the validation period of the data series is passed, when transmission acknowledgment information in a HARQ process for the downlink user data is transmitted a predetermined number of times.

In the second aspect, the mobile station is configured to release the preamble even before the validation period of the data series is passed, when receiving a command for adjusting uplink transmission timing.

In the second aspect, the data series can be a preamble for a random access channel, and the mobile station can be configured to notify, to the radio base station, the preamble designated by the uplink synchronization request by using the random access channel, when successfully receiving the uplink synchronization request transmitted by the radio base station.

A third aspect of the present invention is summarized as a radio base station configured to restart transmission of downlink user data to a mobile station in a discontinuous reception state according to claim 11, wherein the radio base station is configured to: allocate a data series for identifying the mobile station, to the mobile station, and transmit an uplink synchronization request to the mobile station, the uplink synchronization request designating the allocated data series; create a command for adjusting uplink transmission timing and transmit the command to the mobile station, when receiving the data series from the mobile station; restart transmission of the downlink user data to the mobile station, when not receiving the data series from the mobile station until a predetermined period is passed after transmission of the command; create the command and transmit the command to the mobile station, when receiving the data series from the mobile station before the predetermined period is passed after transmission of the command; and release the data series and allocate a new data series to the mobile station, when a validity period of the data series is passed, wherein the radio base station can be configured to release the data series even before the validation period of the data series is passed, when transmission acknowledgment information in a HART process for the downlink user data is detected a predetermined number of times.

In the third aspect, the new data series can be the same data series as the released data series.

In the third aspect, the data series can be a preamble for a random access channel.

As described above, the present invention can provide a transmission restarting method, a mobile station, and a radio base station which enable prevention of shortage of dedicated preambles allocatable to mobile stations by defining a method of releasing a dedicated preamble for a RACH in a procedure for restarting transmission of downlink user data to a mobile station in a discontinuous reception state.

### Brief Description of the Drawings

[Fig. 1] Fig. 1 is a view for explaining a problem of procedures for a restart from a DRX state in a mobile communication system according to a conventional technique.
[Fig. 2] Fig. 2 is a functional block diagram of a radio base station and a mobile station according to a first embodiment of the present invention.
[Fig. 3] Fig. 3 is a flowchart showing operations of the radio base station according to the first embodiment of the present invention.
[Fig. 4] Fig. 4 is a flowchart showing operations of the mobile station according to the first embodiment of the present invention.
[Fig. 5] Fig. 5 is a view for explaining procedures for a restart from a DRX state in a mobile communication system according to the first embodiment of the present invention.
[Fig. 6] Fig. 6 is a flowchart showing the operations of the radio base station according to the first embodiment of the present invention.
[Fig. 7] Fig. 7 is a view for explaining the procedures for the restart from the DRX state in the mobile communication system according to the first embodiment of the present invention.

### Best Mode for Carrying Out the Invention

### (Configuration of Mobile Communication System according to First Embodiment of the Present Invention)

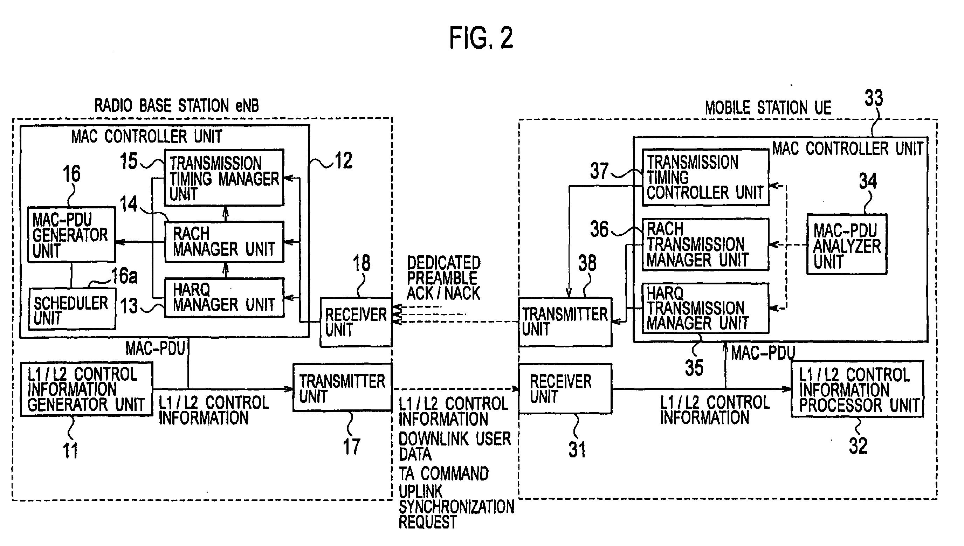

A configuration of a mobile communication system according to a first embodiment of the present invention will be described with reference to Fig. 2. In this embodiment, a mobile communication system applying a radio access system defined by the LTE will be described as an example. However, the present invention is not limited to such mobile communication system and is also applicable to mobile communication systems applying other radio access systems.

As shown in Fig. 2, the mobile communication system according to this embodiment includes a radio base station eNB and a mobile station UE. Moreover, the mobile station is configured to establish uplink synchronization when a reception state of the mobile station UE transitions from a DRX state (a discontinuous reception state) to a continuous reception state.

The radio base station eNB includes an L1/L2 control information generator unit 11, a MAC controller unit 12, a transmitter unit 17, and a receiver unit 18.

The L1/L2 control information generator unit 11 is configured to generate L1/L2 control information.

The L1/L2 control information includes, for example, radio resource notification control information for notifying of a radio resource for transmission of downlink data allocated to the mobile station UE.

The radio resource notification control information does not include a common identifier (RA-RNTI: Random Access - Radio Network Temporary Identifier) that is allocated to a response to a random access, but includes an identifier (C-RNTI: Cell-Radio Network Temporary Identifier) for individually identifying the mobile station UE within a cell. In other words, in this embodiment, the above-described allocation of the radio resource is executed by use of the C-RNTI instead of the RA-RNTI.

Moreover, in this embodiment, downlink data is assumed to correspond to a MAC-PDU and to include downlink user data to be transmitted by DCCH, DTCH or the like, a TA command, an uplink synchronization request, and so forth.

The MAC controller unit 12 includes a HARQ manager unit 13, a RACH manager unit 14, a transmission timing manager unit 15, a MAC-PDU generator unit 16, and a scheduler unit 16a.

The HARQ manager unit 13 is configured to perform retransmission control based on transmission acknowledgment information (ACK/NACK) of a HARQ process.

The RACH manager unit 14 is configured to allocate a dedicated preamble (a data series which is individually allocated to each mobile station UE and used for identifying the mobile station) to be transmitted by an asynchronous RACH, to the mobile station UE. Moreover, the RACH manager unit 14 is configured to identify the dedicated preamble included in the asynchronous RACH transmitted from the mobile station UE.

Moreover, the RACH manager unit 14 may be configured to set up a validity period of the dedicated preamble allocated to the mobile station UE. Here, the validity period may be defined by a period starting from transmission of the uplink synchronization request or the TA command by the radio base station eNB or defined by the maximum number of times of retransmission of the dedicated preamble when the TA command is not received.

Further, when the validity period of a dedicated preamble allocated to the mobile station UE is passed, the RACH manager unit 14 is configured to release the dedicated preamble and to allocate a new dedicated preamble to the mobile station UE. Here, the RACH manager unit 14 may be configured to release the dedicated preamble when a timer started at the time of transmission of the uplink synchronization request or the TA command expires (when the validity period is passed). Alternatively, the RACH manager unit 14 may be configured to release the dedicated preamble when the number of times of retransmission of the dedicated preamble reaches the maximum number of times of retransmission thereof (when the validity period is passed). Still alternatively, the RACH manager unit 14 may be configured to release the dedicated preamble when any earlier one of a period until the timer expires and a period until the number of times of transmission reaches the maximum number of times of retransmission is passed. Still alternatively, the RACH manager unit 14 may be configured to release the dedicated preamble when both of the period until the timer expires and the period until the number of times of transmission reaches the maximum number of times of retransmission are passed.

Here, the new dedicated preamble may be obtained by allocating the same one as the released dedicated preamble or by allocating a different preamble.

The transmission timing manager unit 15 is configured to generate a TA command for adjusting uplink transmission timing in response to reception timing of an dedicated preamble notified by the mobile station UE, when the dedicated preamble is received from the mobile station UE before a RACH reception timer (L1 retransmission) expires after the transmitter unit 17 transmits an uplink synchronization request.

Here, the uplink transmission timing includes transmission timing in an uplink control channel and in an uplink data channel.

The MAC-PDU generator unit 16 is configured to generate a MAC-PDU (downlink data) in a radio subframe to which a transmission opportunity is allocated by the scheduler unit 16a, in response to instructions and the like from the HARQ manager unit 13, the RACH manager unit 14, and the transmission timing manager unit 15.

To be more precise, the MAC-PDU generator unit 16 is configured to generate a MAC-PDU including downlink user data to be retransmitted in response to a retransmission control instruction from the HARQ manager unit 13.

Moreover, the MAC-PDU generator unit 16 is configured to generate a MAC-PDU including an uplink synchronization request that designates the dedicated preamble for the mobile station UE allocated by the RACH manager unit 14.

Here, the uplink synchronization request may be configured to designate the dedicated preamble for the mobile station UE by containing the dedicated preamble for the mobile station UE itself or to designate the dedicated preamble for the mobile station UE by containing an identifier for identifying the dedicated preamble for the mobile station UE instead of containing the dedicated preamble for the mobile station UE itself.

Note that the uplink synchronization request may be configured to designate the dedicated preamble for the mobile station UE and to designate the validity period of the dedicated preamble allocated by the RACH manager unit 14.

Moreover, when a dedicated preamble for the mobile station UE is newly allocated to the mobile station UE by the RACH manager unit 14, the MAC-PDU generator unit 16 is configured to generate a MAC-PDU containing an uplink synchronization request designating the dedicated preamble.

In addition, the MAC-PDU generator unit 16 is configured to.generate a MAC-PDU containing the TA command that is created by the transmission timing manager unit 15.

The transmitter unit 17 is configured to transmit L1/L2 control information by using an L1/L2 control channel (such as a PDCCH: Physical Downlink Control Channel) and to transmit a MAC-PDU including downlink user data, an uplink synchronization request, a TA command, and so forth by using a downlink data channel (such as a DL-SCH).

For example, the transmitter unit 17 is configured to notify a radio resource for downlink data transmission allocated to the mobile station UE, by using radio resource notification control information transmitted via the L1/L2 control channel.

Meanwhile, the transmitter unit 17 may be configured to notify, to the mobile station UE located in a specified area, the validity period of the dedicated preamble allocated by the RACH manager unit 14 by use of a notification channel (such as a BCH: Broadcast Channel).

Meanwhile, the transmitter unit 17 may be configured to notify, to the mobile station UE, the validity period of the dedicated preamble allocated by the RACH manager unit 14 individually when the mobile station UE sets up an RRC (Radio Resource Control) connection.

Meanwhile, the transmitter unit 17 may be configured to notify, to the mobile station UE, the validity period of the dedicated preamble allocated by the RACH manager unit 14 individually as needed during communication by the mobile station UE.

The receiver unit 18 is configured to receive an dedicated preamble for the mobile station UE and to receive transmission acknowledgment information in a HARQ process via an uplink channel (such as a PUCCH: Physical Uplink Control Channel or a PUSCH: Physical Uplink Shared Channel).

The mobile station UE includes a receiver unit 31, an L1/L2 control information processor unit 32, a MAC controller unit 33, and a transmitter unit 38. Here, the L1/L2 control information processor unit 32 and the MAC controller unit 33 may be realized by a chip that is mounted on the mobile station UE.

The receiver unit 31 is configured to receive L1/L2 control information via the L1/L2 control channel and to receive a MAC-PDU containing downlink user data, an uplink synchronization request, a TA command, and the like by using the downlink data channel.

Moreover, the receiver unit 31 is configured to receive the validity period of the dedicated preamble notified by the radio base station eNB and notifies the RACH transmission manager unit 36 of the validity period.

The L1/L2 control information processor unit 32 is configured to perform predetermined L1/L2 control processing in accordance with the received L1/L2 control information.

The MAC controller unit 33 includes a MAC-PDU analyzer unit 34, a HARQ transmission manager unit 35, a RACH transmission manager unit 36, and a transmission timing controller unit 37.

The MAC-PDU analyzer unit 34 is configured to analyze the received MAC-PDU.

The HARQ transmission manager unit 35 is configured to manage transmission of transmission acknowledgment information (ACK/NACK) in a HARQ process in accordance with a result of analysis of the MAC-PDU performed by the MAC-PDU analyzer unit 34.

Here, the HARQ manager unit 35 may, but does not necessarily have to, transmit the transmission acknowledgment information in the HARQ process to the MAC-PDU that contains the TA command.

The RACH transmission controller unit 36 is configured to manage transmission of an asynchronous RACH in accordance with the analysis result of the MAC-PDU by the MAC-PDU analyzer unit 34.

To be more precise, when the uplink synchronization request from the radio base station eNB is received, the RACH transmission manager unit 36 is configured to instruct the transmitter unit 38 to transmit the dedicated preamble designated in the uplink synchronization request by using the asynchronous RACH.

Meanwhile, when the TA command from the radio base station eNB is not received for a predetermined period, the RACH transmission manager unit 36 is configured to instruct the transmitter unit 38 to transmit the dedicated preamble designated in the uplink synchronization request again by using the asynchronous RACH.

Moreover, when the validity period of a dedicated preamble allocated to the mobile station UE is passed, the RACH transmission manager unit 36 is configured to release the dedicated preamble. Here, the RACH transmission manager unit 36 may be configured to release the dedicated preamble when a timer started at the time of transmission of the dedicated preamble expires (when the validity period is passed). Alternatively, the RACH transmission manager unit 36 may be configured to release the dedicated preamble when the number of times of retransmission of the dedicated preamble reaches the maximum number of times of retransmission thereof (when the validity period is passed). Still alternatively, the RACH transmission manager unit 36 may be configured to release the dedicated preamble when any earlier one of a period until the timer expires and a period until the number of times of transmission reaches the maximum number of times of retransmission is passed. Still alternatively, the RACH transmission manager unit 36 may be configured to release the dedicated preamble when both of the period until the timer expires and the period until the number of times of transmission reaches the maximum number of times of retransmission are passed.

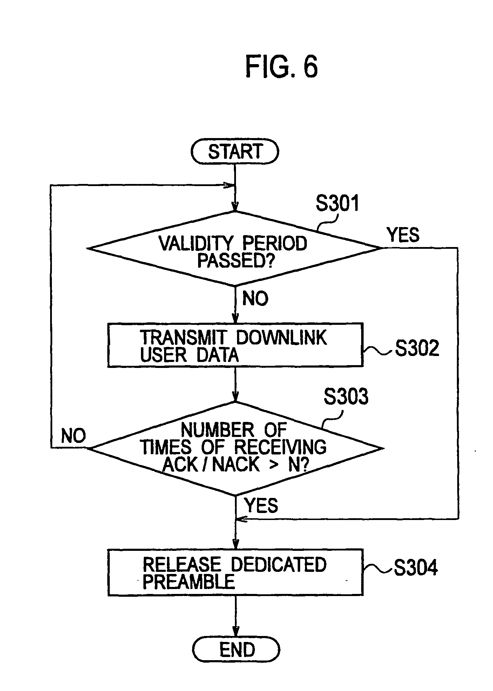

Still alternatively, the RACH transmission manager unit 36 may be configured to release the dedicated preamble even before the validity period of the dedicated preamble is passed when the transmission acknowledgment information (ACK/NACK) in the HARQ process for downlink data is transmitted to the radio base station a predetermined number of times (N in the case of Fig. 6).

Still alternatively, the RACH transmission manager unit 36 may be configured to release the dedicated preamble even before the validity period of the dedicated preamble is passed when the TA command is received from the radio base station eNB.

Here, as for the validity period, the RACH transmission manager unit 36 may be configured to apply the validity period notified by the radio base station eNB as described above, or apply a predetermined validity period.

The transmission timing controller unit 37 is configured to control uplink transmission timing (uplink channel transmission timing for an uplink data channel and an uplink control channel and the like) in accordance with the analysis result of the MAC-PDU by the MAC-PDU analyzer unit 34.

To be more precise, the transmission timing controller unit 37 is configured to establish uplink synchronization by controlling the uplink transmission timing in accordance with the TA command and the like transmitted by the radio base station eNB.

The transmitter unit 38 is configured to transmit the dedicated preamble for the mobile station UE via the asynchronous RACH in response to instructions from the HARQ transmission manager unit 35, the RACH transmission manager unit 36, and the transmission timing controller unit 37, and to transmit the transmission acknowledgment information (ACK/NACK) in the HARQ process via the uplink channel (such as the PUCCH or the PUSCH).

### (Operations of Mobile Communication System according to First Embodiment of the Present Invention)

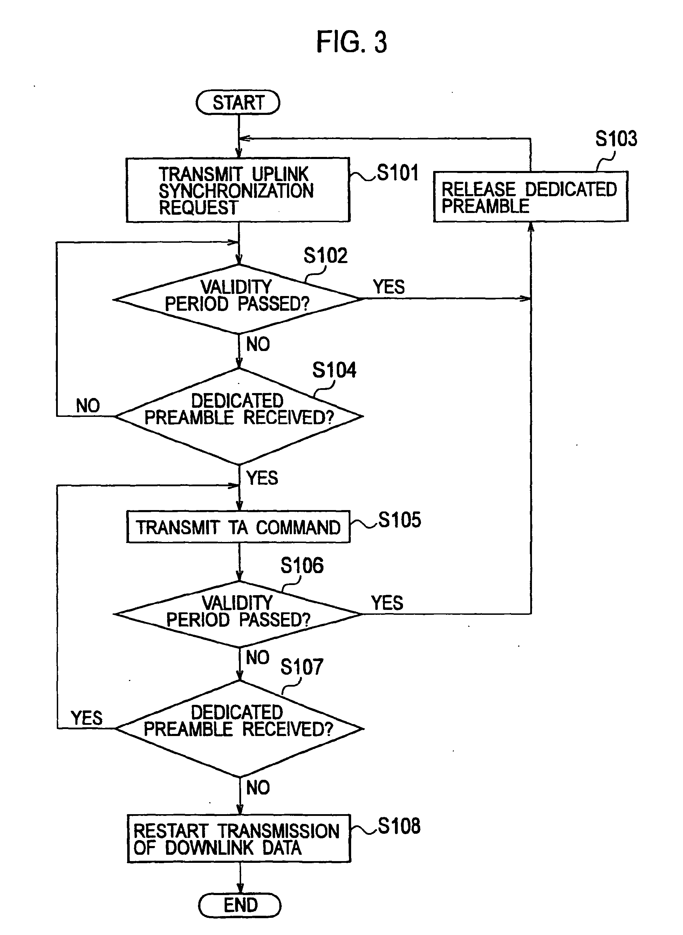

Operations of the mobile communication system according to the first embodiment of the present invention will be described with reference to Fig. 3 to Fig. 7.

First, an operation of the radio base station eNB according to this embodiment before transmission of downlink user data is restarted will be described with reference to Fig. 3.

As shown in Fig. 3, when downlink user data to be transmitted to the mobile station UE occurs in Step S101, the radio base station eNB allocates a radio resource for downlink data transmission and a dedicated preamble to the mobile station UE, and transmits an uplink synchronization request containing the dedicated preamble and the validity period of the dedicated preamble by using the radio resource (the downlink data channel) for downlink data transmission thus allocated.

When determining that the validity period of the dedicated preamble is not passed in Step S102, the radio base station eNB determines whether or not to have received the dedicated preamble for the above-described uplink synchronization request from the mobile station UE in Step S104.

On the other hand, when determining that the validity period of the dedicated preamble is passed in Step S102, the radio base station eNB releases the dedicated preamble in Step S103 and allocates a new dedicated preamble to the mobile station UE in Step S101.

When determining in Step S104 that the radio base station eNB has received the above-described dedicated preamble, the radio base station eNB transmits a TA command to the mobile station UE in Step S105.

On the other hand, this operation returns to Step S102 when it is determined in Step S104 that the radio base station eNB has not received the above-described dedicated preamble.

When determining that the validity period of the dedicated preamble is not passed in Step S106, in Step S107, the radio base station eNB determines whether or not to have received the dedicated preamble for the above-described TA command from the mobile station UE, before a transmission restart determination timer expires.

On the other hand, when determining that the validity period of the dedicated preamble is passed in Step S106, the radio base station eNB releases the dedicated preamble in Step S103 and allocates a new dedicated preamble to the mobile station UE in Step S101.

When determining that the radio base station eNB has not received the above-described dedicated preamble in Step S107, in Step S108, the radio base station eNB determines that uplink synchronization with the mobile station UE is established and restarts transmission of downlink data to the mobile station UE.

On the other hand, this operation returns to Step S105 when it is determined that the radio base station eNB has received the above-described dedicated preamble.

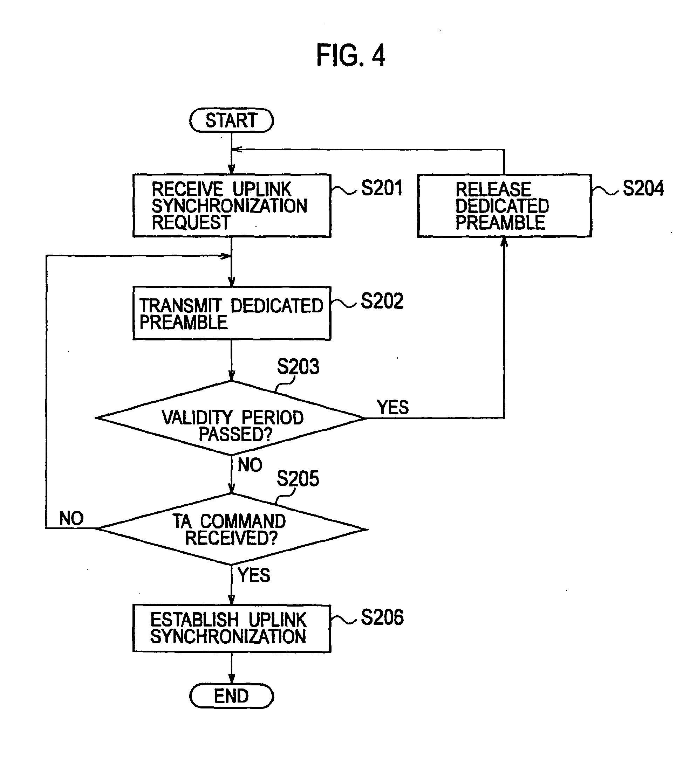

Second, an operation of the mobile station UE according to this embodiment before transmission of downlink user data is restarted will be described with reference to Fig. 4.

As shown in Fig. 4, in Step S201, the mobile station UE in the discontinuous reception state receives an uplink synchronization request transmitted from the radio base station eNB at reception timing (a DRX cycle) in discontinuous reception.

In Step S202, the mobile station UE transmits a dedicated preamble for the mobile station UE, which is included in the received uplink synchronization request, to the radio base station eNB.

When determining that the validity period of the dedicated preamble is not passed in Step S203, the mobile station UE determines whether or not to have received a TA command from the radio base station eNB before a lapse of a predetermined period in Step S205.

On the other hand, when determining that the validity period of the dedicated preamble is passed in Step S203, the radio base station eNB releases the dedicated preamble in Step S204 and allocates a new dedicated preamble to the mobile station UE in Step S201.

When determining that the mobile station UE has received the above-described TA command in Step S205, the mobile station UE determines that uplink synchronization with the radio base station eNB is established in Step S206.

On the other hand, this operation returns to Step S202 when it is determined that the mobile station UE has not received the above-described TA command.

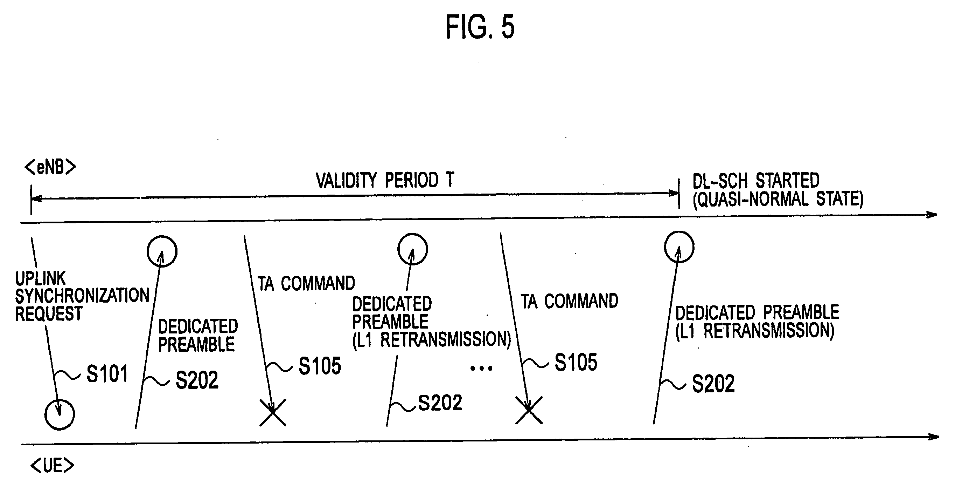

Thus, as shown in Fig. 5, in the mobile communication system according to this embodiment, when the mobile station UE fails to receive the TA command transmitted from the radio base station eNB, the mobile station UE can urge the radio base station eNB to retransmit the TA command by transmitting the dedicated preamble for the mobile station UE until a validity period T of the dedicated preamble expires.

Third, an operation of the radio base station eNB according to this embodiment after transmission of downlink user data is restarted will be described with reference to Fig. 6.

As shown in Fig. 6, the radio base station eNB determines whether or not the validity period of the dedicated preamble is passed in Step S301. When determining that the validity period is not passed, in Step S302, the radio base station eNB determines whether or not to have received the transmission acknowledgment information (ACK/NACK) in the HARQ process from the mobile station UE a predetermined number of times N or more.

On the other hand, when determining that the validity period is passed, the radio base station eNB releases the dedicated preamble in Step S304.

Meanwhile, when it is determined to be equal to or above the predetermined number of times N in Step S302, the radio base station eNB releases the dedicated preamble in Step S304.

On the other hand, this process returns to Step S301 when it is determined not to be equal to or above the predetermined number of times N in Step S302.

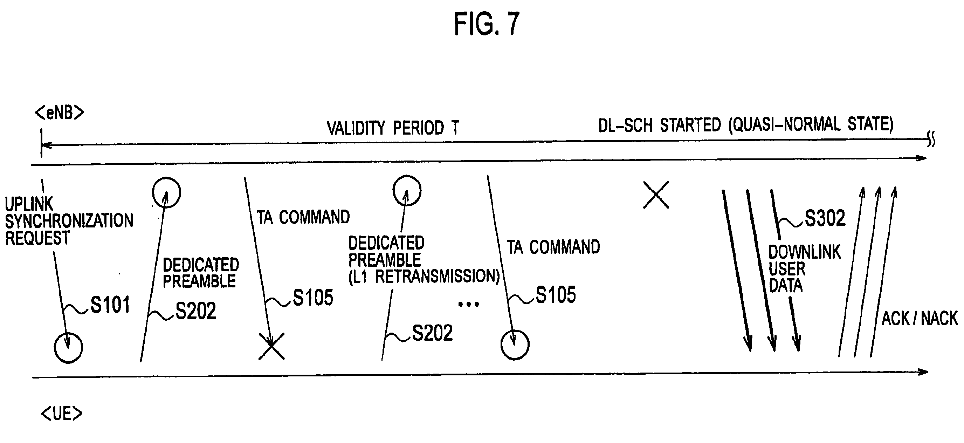

Thus, as shown in Fig. 7, in the mobile communication system according to this embodiment, even if the validity period T of the dedicated preamble for the mobile station UE is not passed, uplink synchronization between the mobile station UE and the radio base station eNB is established when transmission of downlink user data from the radio base station eNB to the mobile station UE via the DL-SCH is successfully transmitted the predetermined number of times N, that is, when the transmission acknowledgment information (ACK/NACK) in the HARQ process for the downlink user data is detected by the radio base station eNB the predetermined number of times N. Accordingly, the dedicated preamble for the mobile station UE does not need to be maintained any longer and thus can be released promptly.

### (Operation and Effect of Mobile Communication System according to First Embodiment of the Present Invention)

According to the mobile communication system of the first embodiment of the present invention, shortage of dedicated preambles allocatable to mobile stations can be prevented by defining a method of releasing a dedicated preamble for a RACH.

The present invention has been explained in detail by using the above-described embodiment. However, it is obvious to those skilled in the art that the present invention is not limited to the embodiment described herein. The present invention can be implemented as modified and corrected forms without departing from the scope of the present invention to be defined by the appended claims. Therefore, it is to be understood that the description herein is for illustrative purposes only and therefore does not intend to limit the present invention whatsoever.

### Industrial Applicability

As described above, the present invention can provide a transmission restarting method, a mobile station, and a radio base station which enable prevention of shortage of dedicated preambles allocatable to mobile stations by defining a method of releasing a dedicated preamble for a RACH in a procedure for restarting transmission of downlink user data to a mobile station in a discontinuous reception state. Accordingly, the present invention is useful for radio communication such as mobile communication.

## Claims

1. A transmission restarting method of restarting transmission of downlink user data to a mobile station (UE) in a discontinuous reception state, comprising the steps of:
allocating, at a radio base station (eNB), a data series for identifying the mobile station, to the mobile station (UE);
transmitting (S101), at the radio base station (eNB), an uplink synchronization request to the mobile station (UE), the uplink synchronization request designating the allocated data series;
notifying (S202), at the mobile station (UE), to the radio base station (eNB) the data series designated by the uplink synchronization request, when successfully receiving the uplink synchronization request;
creating, at the radio base station (eNB), a command for adjusting uplink transmission timing, and transmitting (S105) the command to the mobile station (UE), when receiving the data series from the mobile station (UE);
restarting (S108), at the radio base station (eNB), transmission of the downlink user data to the mobile station (UE), when not receiving the data series from the mobile station (UE) until a predetermined period is passed after transmission of the command;
creating, at the radio base station (eNB), the command, and transmitting the command to the mobile station (UE), when receiving the data series from the mobile station (UE) before the predetermined period is passed after transmission of the command;
releasing (S103, S204), at the mobile station (UE) and the radio base station (eNB), the data series, when a validity period of the data series is passed; and
allocating, at the radio base station (eNB), a new data series to the mobile station (UE), when the data series is released; wherein
the mobile station (UE) and the radio base station (eNB) release the data series even before the validity period of the data series is passed, when transmission acknowledgment information in a HARQ process for the downlink user data is detected by the radio base station (eNB) a predetermined number of times.

2. The transmission restarting method according to claim 1, wherein the radio base station (eNB) notifies, to the mobile station (UE), the data series and the validity period of the data series, when transmitting the uplink synchronization request.

3. The transmission restarting method according to claim 1, wherein the radio base station (eNB) notifies, to the mobile station (UE), the validity period of the data series, when the mobile station (UE) sets up a radio resource control, RRC, connection.

4. The transmission restarting method according to claim 1, wherein the radio base station (eNB) notifies, to the mobile station (UE), the validity period of the data series, when the mobile station (UE) executes a process for registration to a network.

5. The transmission restarting method according to claim 1, wherein the validity period of the data series is defined by a maximum number of times of retransmission of the data series when the command is not received.

6. The transmission restarting method according to claim 1, wherein the new data series is the same data series as the released data series.

7. The transmission restarting method according to claim 1, wherein the data series is a preamble for a random access channel; and
the mobile station (UE) notifies, to the radio base station (eNB), the preamble designated by the uplink synchronization request by using the random access channel, when successfully receiving the uplink synchronization request.

8. A mobile station (UE) configured to restart reception of downlink user data in a discontinuous reception state, comprising a transmitter unit (38) and a transmission manager unit (36), wherein
the transmitter unit (38) is configured to notify, to a radio base station (eNB), a data series which is individually allocated to each mobile station and used for identifying the mobile station, as designated by an uplink synchronization request transmitted by the radio base station (eNB), when successfully receiving the uplink synchronization request; wherein
the transmitter unit (38) is configured to retransmit, to the radio base station (eNB), the data series, when failing to receive a command for adjusting uplink transmission timing, the command transmitted by the radio base station (eNB); and
the transmission manager unit (36) is configured to release the data series, when a validity period of the data series is passed; and
the transmission manager unit (36) is configured to release the data series even before the validity period of the data series is passed, when transmission acknowledgment information in a HARQ process for the downlink user data is transmitted a predetermined number of times.

9. The mobile station according to claim 8, wherein the transmission manager unit (36) is configured to release the data series even before the validity period of the data series is passed, when receiving a command for adjusting uplink transmission timing.

10. The mobile station according to claim 8, wherein the data series is a preamble for a random access channel, and
the transmitter unit (38) is configured to notify, to the radio base station (eNB), the data series designated by the uplink synchronization request by using the random access channel, when successfully receiving the uplink synchronization request transmitted by the radio base station.

11. A radio base station (eNB) configured.to restart transmission of downlink user data to a mobile station (UE) in a discontinuous reception state, the radio base station comprising:
a manager unit (14) configured to allocate a data series for identifying the mobile station (UE), to the mobile station, and transmit an uplink synchronization request to the mobile station (UE), the uplink synchronization request designating the allocated data series;
a transmission timing manager unit (15) configured to create a command for adjusting uplink transmission timing and transmit the command to the mobile station (UE), when receiving the data series from the mobile station (UE);
a transmitter unit (17) configured to restart transmission of the downlink user data to the mobile station (UE), when not receiving the data series from the mobile station (UE) until a predetermined period is passed after transmission of the command; wherein
the manager unit (14) is configured to create the command and transmit the command to the mobile station (UE), when receiving the data series from the mobile station (UE) before the predetermined period is passed after transmission of the command;
the manager unit (14) is configured to release the data series and allocate a new data series to the mobile station (UE), when a validity period of the data series is passed; and
the manager unit (14) is configured to release the data series even before the validity period of the data series is passed, when transmission acknowledgment information in a HARQ process for the (downlink user data is detected a predetermined number of times.

12. The radio base station according to claim 11, wherein the new data series is the same data series as the released data series.

13. The radio base station according to claim 11, wherein the data series is a preamble for a random access channel.

## Patentansprüche

1. Ein Übertragungsneustartverfahren zum Neustarten einer Übertragung von Downlink-Benutzerdaten an eine Mobilstation (UE) in einem unstetigen Empfangszustand, die Schritte umfassend:
Zuweisen, an einer Funkbasisstation (eNB), an die Mobilstation (UE) einer Datenfolge zum Identifizieren der Mobilstation,
Übertragen (S101), an der Funkbasisstation (eNB), einer Uplink-Synchronisationsanfrage an die Mobilstation (UE), wobei die Uplink-Synchronisationsanfrage die zugewiesene Datenfolge bestimmt;
Benachrichtigen (S202), an der Mobilstation (UE), der Funkbasisstation (eNB) über die durch die Uplink-Synchronisationsanfrage bestimmte Datenfolge, wenn die Uplink-Synchronisationsanfrage erfolgreich empfangen wird;
Erzeugen, an der Funkbasisstation (eNB), eines Befehls zum Anpassen einer Uplink-Übertragungszeitsteuerung, und Übertragen (S105) des Befehls an die Mobilstation (UE), wenn die Datenfolge von der Mobilstation (UE) empfangen wird;
Neustarten (S108), an der Funkbasisstation (eNB), einer Übertragung der Downlink-Benutzerdaten an die Mobilstation (UE), wenn die Datenfolge nicht von der Mobilstation (UE) empfangen wird bis eine vorbestimmte Zeitspanne nach Übertragung des Befehls verstrichen ist;
Erzeugen, an der Funkbasisstation (eNB), des Befehls, und Übertragen des Befehls an die Mobilstation (UE), wenn die Datenfolge von der Mobilstation (UE) empfangen wurde bevor die vorbestimmte Zeitspanne nach Übertragung des Befehls verstrichen ist;
Freigeben (S103, S204), an der Mobilstation (UE) und der Funkbasisstation (eNB), der Datenfolge, wenn eine Gültigkeitszeitspanne der Datenfolge verstrichen ist; und
Zuweisen, an der Funkbasisstation (eNB), einer neuen Datenfolge an die Mobilstation (UE), wenn die Datenfolge freigegeben ist; wobei
die Mobilstation (UE) und die Funkbasisstation (eNB) die Datenfolge frei geben, noch bevor die Gültigkeitszeitspanne der Datenfolge verstrichen ist, wenn eine Übertragungsbestätigungsinformation in einem HARQ Prozess für die Durchlauf-Benutzerdaten durch die Funkbasisstation (eNB) eine vorbestimmte Anzahl von Malen erfasst wird.

2. Das Übertragungsneustartverfahren nach Anspruch 1, wobei die Funkbasisstation (eNB) die Mobilstation (UE) über die Datenfolge und die Gültigkeitszeitspanne der Datenfolge benachrichtigt, wenn die Uplink-Synchronisationsanfrage übertragen wird.

3. Das Übertragungsneustartverfahren nach Anspruch 1, wobei die Funkbasisstation (eNB) die Mobilstation (UE) über die Gültigkeitszeitspanne der Datenfolge benachrichtigt, und wenn die Mobilstation (UE) eine Funk-Ressourcen-Steuerungs-, RRC-, Verbindung aufbaut.

4. Das Übertragungsneustartverfahren nach Anspruch 1, wobei die Funkbasisstation (eNB) die Mobilstation (UE) über die Gültigkeitszeitspanne der Datenfolge benachrichtigt, wenn die Mobilstation (UE) einen Prozess zur Registration an ein Netzwerk ausführt.

5. Das Übertragungsneustartverfahren nach Anspruch 1, wobei die Gültigkeitszeitspanne der Datenfolge definiert ist durch eine Maximalanzahl von Malen einer Übertragung der Datenfolge, wenn der Befehl nicht empfangen wird.

6. Das Übertragungsneustartverfahren nach Anspruch 1, wobei die neue Datenfolge die gleiche Datenfolge wie die freigegebene Datenfolge ist.

7. Das Übertragungsneustartverfahren nach Anspruch 1, wobei die Datenfolge eine Präambel für einen Zufallszugriffskanal ist; und
die Mobilstation (UE) die Funkbasisstation (eNB) über die durch die Uplink-Synchronisationsanfrage bestimmte Präambel benachrichtigt unter Verwendung des Zufallszugriffskanals, wenn die Uplink-Synchronisationsanfrage erfolgreich empfangen wird.

8. Eine Mobilstation (UE) eingerichtet zum Neustarten eines Empfangs von Downlink-Benutzerdaten in einem unstetigen Empfangszustand, umfassend eine Übertragungseinheit (38) und eine Übertragungsverwaltungseinheit (36), wobei
die Übertragungseinheit (38) eingerichtet ist zum Benachrichtigen einer Funkbasisstation (eNB) über eine Datenfolge, die individuell an jede Mobilstation zugewiesen wird und zum Identifizieren der Mobilstation benutzt wird, wie bestimmt durch eine durch die Funkbasisstation (eNB) übertragene Uplink-Synchronisationsanfrage, wenn die Uplink-Synchronisationsanfrage erfolgreich empfangen wird; wobei
die Übertragungseinheit (38) eingerichtet ist zum erneuten Übermitteln der Datenfolge an die Funkbasisstation (eNB), wenn es misslingt, einen Befehl zum Anpassen einer Uplink-Übertragungszeitsteuerung zu empfangen, wobei der Befehl von der Funkbasisstation (eNB) übertragen wird; und
die Übertragungsverwaltungseinheit (36) eingerichtet ist, die Datenfolge freizugeben, wenn eine Gültigkeitszeitspanne der Datenfolge verstrichen ist; und
die Übertragungsverwaltungseinheit (36) eingerichtet ist, die Datenfolge frei zu geben, noch bevor die Gültigkeitszeitspanne der Datenfolge verstrichen ist, wenn eine Übertragungsbestätigungsinformation in einem HARQ-Prozess für die Downlink-Benutzerdaten eine vorbestimmte Anzahl von Malen übertragen wird.

9. Die Mobilstation nach Anspruch 8, wobei die Übertragungsverwaltungseinheit (36) eingerichtet ist, die Datenfolge frei zu geben, noch bevor die Gültigkeitszeitspanne der Datenfolge verstrichen ist, wenn ein Befehl zum Anpassen einer Uplink-Übertragungszeitsteuerung empfangen wird.

10. Die Mobilstation nach Anspruch 8, wobei die Datenfolge eine Präambel für einen Zufallszugriffskanal ist, und die Übertragungseinheit (38) eingerichtet ist, die Funkbasisstation (eNB) über die durch die Uplink-Synchronisationsanfrage bestimmte Datenfolge unter Verwendung des Zufallszugriffskanal zu benachrichtigen, wenn die durch die Funkbasisstation übermittelte Uplink-Synchronisationsanfrage erfolgreich empfangen wird.

11. Eine Funkbasisstation (eNB), eingerichtet zum Neustarten einer Übertragung von Downlink-Benutzerdaten an eine Mobilstation (UE) in einem unstetigen Empfangszustand, wobei die Funkbasisstation umfasst:
eine Verwaltungseinheit (14), eingerichtet zum Zuweisen einer Datenfolge zum Identifizieren der Mobilstation (UE), an die Mobilstation, und zum Übertragen einer Uplink-Synchronisationsanfrage an die Mobilstation (UE), wobei die Uplink-Synchronisationsanfrage die zugewiesene Datenfolge bestimmt;
eine Übertragungszeitsteuerungs-Verwaltungseinheit (15), eingerichtet zum Erzeugen eines Befehls zum Anpassen einer Uplink-Übertragungszeitsteuerung und zum Übertragen des Befehls an die Mobilstation (UE), wenn die Datenfolge von der Mobilstation (UE) empfangen wird;
eine Übertragungseinheit (17), eingerichtet zum Neustarten einer Übertragung von Downlink-Benutzerdaten an die Mobilstation (UE), wenn die Datenfolge nicht von der Mobilstation (UE) empfangen wird bis eine vorbestimmte Zeitspanne nach Übertragung des Befehls verstrichen ist; wobei
die Verwaltungseinheit (14) eingerichtet ist zum Erzeugen des Befehls und zum Übertragen des Befehls an die Mobilstation (UE), wenn die Datenfolge von der Mobilstation (UE) empfangen wird, bevor die vorbestimmte Zeitspanne nach Übertragung des Befehls verstrichen ist;
die Verwaltungseinheit (14) eingerichtet ist zum Freigeben der Datenfolge und zum Zuweisen einer neuen Datenfolge an die Mobilstation (UE), wenn eine Gültigkeitszeitspanne der Datenfolge verstrichen ist; und
die Verwaltungseinheit (14) eingerichtet ist zum Freigeben der Datenfolge noch bevor die Gültigkeitszeitspanne der Datenfolge verstrichen ist, wenn eine Übertragungsbestätigungsinformation in einem HARQ-Prozess für die Downlink-Benutzerdaten eine vorbestimmte Anzahl von Malen erfasst wird.

12. Die Funkbasisstation nach Anspruch 11, wobei die neue Datenfolge die gleiche Datenfolge wie die freigegebene Datenfolge ist.

13. Die Funkbasisstation nach Anspruch 11, wobei die Datenfolge eine Präambel für einen Zufallszugriffskanal ist.

## Revendications

1. Procédé de redémarrage de transmission consistant à redémarrer une transmission de données d'utilisateur en liaison descendante vers une station mobile (UE) dans un état de réception discontinu, comprenant les étapes de :
attribution, au niveau d'une station radio de base (eNB), d'une série de données pour identifier la station mobile, à la station mobile (UE) ;
transmission (S101), au niveau de la station radio de base (eNB), d'une demande de synchronisation en liaison montante à la station mobile (UE), la demande de synchronisation en liaison montante désignant la série de données attribuée ;
notification (S202), au niveau de la station mobile (UE), à la station radio de base (eNB) de la série de données désignée par la demande de synchronisation en liaison montante, lors de la réception avec succès de la demande de synchronisation en liaison montante ;
création, au niveau de la station radio de base (eNB), d'une commande pour ajuster le chronométrage de transmission en liaison montante, et transmission (S105) de la commande à la station mobile (UE), en recevant la série de données en provenance de la station mobile (UE) ;
redémarrage (S108), au niveau de la station radio de base (eNB), de la transmission des données d'utilisateur en liaison descendante vers la station mobile (UE), en ne recevant pas la série de données en provenance de la station mobile (UE) jusqu'à ce qu'une période prédéterminée soit passée après transmission de la commande ;
création, au niveau de la station radio de base (eNB), de la commande, et transmission de la commande à la station mobile (UE), en recevant la série de données en provenance de la station mobile (UE) avant que la période prédéterminée ne soit passée après transmission de la commande ;
libération (S103, S204), au niveau de la station mobile (UE) et de la station radio de base (eNB), de la série de données, quand une période de validité de la série de données est passée ; et
attribution, au niveau de la station radio de base (eNB), d'une nouvelle série de données à la station mobile (UE), quand la série de données est libérée ; dans lequel
la station mobile (UE) et la station radio de base (eNB) libèrent la série de données même avant que la période de validité de la série de données ne soit passée, quand des informations d'accusé de réception de transmission dans un processus HARQ pour les données d'utilisateur en liaison descendante sont détectées par la station radio de base (eNB) un nombre prédéterminé de fois.

2. Procédé de redémarrage de transmission selon la revendication 1, dans lequel la station radio de base (eNB) notifie, à la station mobile (UE), la série de données et la période de validité de la série de données, en transmettant la demande de synchronisation en liaison montante.

3. Procédé de redémarrage de transmission selon la revendication 1, dans lequel la station radio de base (eNB) notifie, à la station mobile (UE), la période de validité de la série de données, quand la station mobile (UE) paramètre une connexion de commande de ressource radio, RRC.

4. Procédé de redémarrage de transmission selon la revendication 1, dans lequel la station radio de base (eNB) notifie, à la station mobile (UE), la période de validité de la série de données, quand la station mobile (UE) exécute un processus d'enregistrement sur un réseau.

5. Procédé de redémarrage de transmission selon la revendication 1, dans lequel la période de validité de la série de données est définie par un nombre maximal de fois de retransmission de la série de données quand la commande n'est pas reçue.

6. Procédé de redémarrage de transmission selon la revendication 1, dans lequel la nouvelle série de données est la même série de données que la série de données libérée.

7. Procédé de redémarrage de transmission selon la revendication 1, dans lequel la série de données est un préambule pour un canal d'accès aléatoire ; et
la station mobile (UE) notifie, à la station radio de base (eNB), le préambule désigné par la demande de synchronisation en liaison montante en utilisant le canal d'accès aléatoire, en recevant avec succès la demande de synchronisation en liaison montante.

8. Station mobile (UE) configurée pour redémarrer la réception de données d'utilisateur en liaison descendante dans un état de réception discontinu, comprenant une unité émettrice (38) et une unité gestionnaire de transmission (36), dans laquelle
l'unité émettrice (38) est configurée pour notifier, à une station radio de base (eNB), une série de données qui est individuellement attribuée à chaque station mobile et utilisée pour identifier la station mobile, telle que désignée par une demande de synchronisation en liaison montante transmise par la station radio de base (eNB), en recevant avec succès la demande de synchronisation en liaison montante ; dans laquelle
l'unité émettrice (38) est configurée pour retransmettre, à la station radio de base (eNB), la série de données, en échouant à recevoir une commande pour ajuster un chronométrage de transmission en liaison montante, la commande transmise par la station radio de base (eNB) ; et
l'unité gestionnaire de transmission (36) est configurée pour libérer la série de données, quand une période de validité de la série de données est passée ; et
l'unité gestionnaire de transmission (36) est configurée pour libérer la série de données même avant que la période de validité de la série de données ne soit passée, quand des informations d'accusé de réception de transmission dans un processus HARQ pour les données d'utilisateur en liaison descendante sont transmises un nombre prédéterminé de fois.

9. Station mobile selon la revendication 8, dans laquelle l'unité gestionnaire de transmission (36) est configurée pour libérer la série de données même avant que la période de validité de la série de données ne soit passée, en recevant une commande pour ajuster le chronométrage de transmission en liaison montante.

10. Station mobile selon la revendication 8, dans laquelle la série de données est un préambule pour un canal d'accès aléatoire, et
l'unité émettrice (38) est configurée pour notifier, à la station radio de base (eNB), la série de données désignée par la demande de synchronisation en liaison montante en utilisant le canal d'accès aléatoire, en recevant avec succès la demande de synchronisation en liaison montante transmise par la station radio de base.

11. Station radio de base (eNB) configurée pour redémarrer une transmission de données d'utilisateur en liaison descendante vers une station mobile (UE) dans un état de réception discontinu, la station radio de base comprenant :
une unité gestionnaire (14) configurée pour attribuer une série de données pour identifier la station mobile (UE), à la station mobile, et pour transmettre une demande de synchronisation en liaison montante à la station mobile (UE), la demande de synchronisation en liaison montante désignant la série de données attribuée ;
une unité gestionnaire de chronométrage de transmission (15) configurée pour créer une commande pour ajuster un chronométrage de transmission en liaison montante et pour transmettre la commande à la station mobile (UE), en recevant la série de données en provenance de la station mobile (UE) ;
une unité émettrice (17) configurée pour redémarrer une transmission des données d'utilisateur en liaison descendante vers la station mobile (UE), en ne recevant pas la série de données en provenance de la station mobile (UE) jusqu'à ce qu'une période prédéterminée après transmission de la commande soit passée ; dans laquelle
l'unité gestionnaire (14) est configurée pour créer la commande et transmettre la commande à la station mobile (UE), en recevant la série de données en provenance de la station mobile (UE) avant que la période prédéterminée ne soit passée après transmission de la commande ;
l'unité gestionnaire (14) est configurée pour libérer la série de données et attribuer une nouvelle série de données à la station mobile (UE), quand une période de validité de la série de données est passée ; et
l'unité gestionnaire (14) est configurée pour libérer la série de données même avant que la période de validité de la série de données ne soit passée, quand des informations d'accusé de réception de transmission dans un processus HARQ pour les données d'utilisateur en liaison descendante sont détectées un nombre prédéterminé de fois.

12. Station radio de base selon la revendication 11, dans laquelle la nouvelle série de données est la même série de données que la série de données libérée.

13. Station radio de base selon la revendication 11, dans laquelle la série de données est un préambule pour un canal d'accès aléatoire.
